# EUROPEAN PATENT SPECIFICATION

(11) **EP 1 146 428 B1**
(45) Date of publication and mention of the grant of the patent: **23.01.2008**
(21) Application number: 00201322.5
(22) Date of filing: 13.04.2000
(51) Int. Cl.: G06F 13/40

(54) **Multi-interface memory card and adapter module for the same**
Multi-Schnittstellenspeicherkarte und Anpassungsmodul dafür
Carte mémoire à interface multiple et module d'adaptation pour une telle carte

(43) Date of publication of application: 17.10.2001
(73) Proprietor: A-DATA Technology Co., Ltd., Chung Ho City T'ai pei (TW); ATECH Totalsolution Co., Ltd, Da-an Dist., T'ai pei (TW)
(72) Inventor: Yao, Li-ho, Taipei (CN)
(74) Representative: Ferguson, Alexander

(56) References cited:
- EP-A- 0 987 876
- WO-A-99/45461
- DE-U- 29 607 724

## Description

### 1. Field of the Invention

The present invention relates to a multi-interface memory card and an adapter module; more particularly, the present invention relates to a memory card with multiple kinds of interfaces to communicate with an electronic product and a computer, respectively, for convenient data access, and an adapter module for such a multi-interface memory card.

### 2. Description of Related Art

Digital devices, such as electronic dictionaries, electronic translators, digital cameras, etc., are in widespread use today. The use of these digital devices requires storing of data in storage media, and generally memory cards are provided for such a purpose. As well known to those skilled in the art, various kinds of memory cards, such as the STONE card, Smart Media card, MMC card, Memory Stick card and Compact Flash card, have been provided with the advantages of compactness and large storage capacity, typically, more than several mega-bytes. The use of such memory cards enables the miniaturization of digital products. However, they do not have standard interfaces for communicating with a computer. Therefore, it is inconvenient to use a computer to read data from the memory card. Some of the existing methods to transfer data between a computer and a memory card are as follows:
1. Using a card reader: A card reader is provided to connect to an interface port of a computer such that the computer is able to read data from a memory card that is inserted in the card reader. As different memory cards have different interfaces, a dedicated card reader must be provided for a specific memory card.
2. Using a transform disk: A transform disk that has the same physical specification as the 3.5-inch disk is provided with a slot for receiving a memory card, such that a computer can write data to or read data from the memory card when the transform disk is inserted into the disk drive of the computer.

There are several problems encountered in using the aforementioned methods. For example, most of the card readers can not write data to the memory cards, and the data access speed is slow when the transform disk and disk drive are used for transferring data between a memory card and a computer. Furthermore, the use of a transform disk and disk drive to read or write data is likely to result in mechanical disorders because data is accessed by physical contact.

Moreover, the interface port provided for a computer generally depends on the requirement of the computer, and may vary according to the development of the computer industry. For example, the USB port and IEEE 1394 interfaces have been introduced recently to provide high speed and large capacity interfacing capabilities. Clearly, if a memory card is to be used with computers with respective different interfaces, different kinds of card readers or transform devices are required, and thus it is obvious that the use of the memory card is inconvenient.

To solve the aforementioned problems, a memory card is provided in U.S. patent 6,385,677 entitled "Dual interface memory card and adapter module for the same." Although this patent may effectively eliminate the drawbacks in using the card reader or transform disk, it is deemed unsatisfactory as the memory card only has one kind of interface, e.g. the USB port, to communicate with the computer. Furthermore, prior arts including WO 99/45461, DE 29607724U and EP 0987876 have proposed some relevant arts.

WO 99/45461 discloses an improved compact flash memory card system including an improved compact flash memory card desktop adapter and an improved compact flash memory card. The improved compact flash memory card desktop adapter utilizes a fifty pin socket to interface with the compact flash memory card. The desktop adapter also utilizes a plug adapter to interface with a computer. For more efficient communication between the improved compact flash memory card and the computer, the improved desktop adapter adopts the universal serial bus architecture. The improved compact flash memory card utilizes a fifty pin connection to interface with a computer through an interface device. The fifty pin connection of the flash memory card can be used with different interface devices in a variety of configurations such as a universal serial bus mode, PCMCIA mode, and ATA IDE mode. Each of these modes of operation require different protocols. Upon initialization with an interface device, this improved compact flash memory card automatically detects which operation mode is used by this interface device and configures the memory card to be compatible with the present operation mode. Because all fifty pins of the flash memory card are occupied to either transfer data or provide control signals to and from the flash memory card, this improved flash memory card merely senses selected pins to determine the present mode of operation.

DE 29607724 U discloses an adapter-connector for connecting an EDP-apparatus or EDP system comprising an PCMCIA-connection, which is provided with a USB-interface, characterized by a PCMCIA-card having a front connection field at the one side as interface, comprising the required controller, driver and/or memory component, and having at least one USB socket, preferably three USB sockets, at the other front-side.

EP0987876 discloses a hand-held battery powered device for transferring data between one or more flash memory modules and a mass storage device. The device includes one or more slots to accept a flash memory module into a housing which includes fixed or removable mass storage device and logic circuitry disposed within the housing for transferring data between the flash memory module and mass storage device. Ports are disclosed for transferring data from the resident mass storage device to the user's computer.

The object of the present invention is to provide a multi-interface memory card and an adapter module for the memory card to conveniently transfer data between the memory card and a computer without the risk of mechanical disorders.

In accordance with one aspect, the present invention provides a multi-interface memory card according to claim 1

In accordance with a further aspect, the present invention provides a multi-interface memory card according to claim 6.

Other objects, advantages, and novel features of the invention will become more apparent from the following detailed description when taken in conjunction with the accompanying drawings.

### IN THE DRAWINGS:

FIG. 1 is the circuit diagram of a multi-interface memory card in accordance with a first preferred embodiment of the present invention;
FIG. 2 is a block diagram of the micro controller shown in FIG. 1;
FIG. 3 is a perspective view of the memory card and an adapter module in accordance with the first preferred embodiment of the present invention;
FIG. 4 is a cross sectional view of the adapter module being inserted with the multi-interface memory card in accordance with the first preferred embodiment of the present invention;
FIG. 5 is a plane view of the adapter module being inserted with the multi-interface memory card in accordance with the first preferred embodiment of the present invention;
FIG. 6 is the circuit diagram of a multi-interface memory card in accordance with a second preferred embodiment of the present invention;
FIG. 7 is a block diagram of the micro controller shown in FIG. 6; and
FIG. 8 is a plane view of the adapter module being inserted with the multi-interface memory card in accordance with the second preferred embodiment of the present invention.

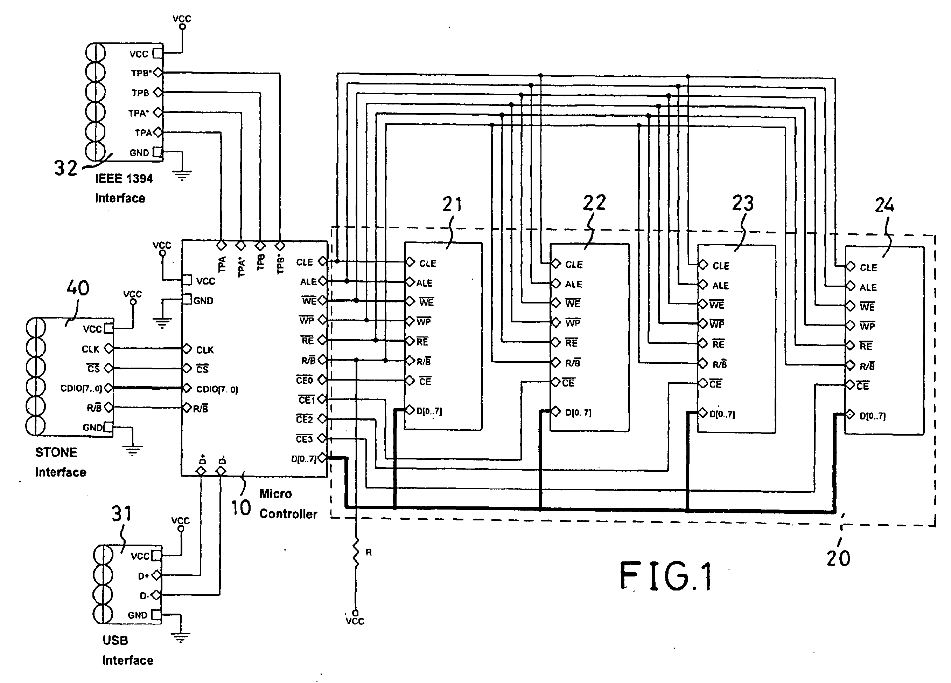

FIG. 1 shows a circuit structure of a multi-interface memory card in accordance with the present invention, which includes a micro controller (10), a memory unit (20), one or more connection interfaces (31, 32), and a product interface (40). The memory unit (20) is connected to the micro controller (10) via an address bus and a data bus, such that external computers or electronic products can read data from or write data to the memory unit (20) under the control of the micro controller (10). The connection interfaces (31, 32) are provided to connect to the memory unit (20) via the micro controller (10) for data access. The product interface (40) is provided to connect to a digital product, such as a digital camera, to read or write data. The micro controller (10) executes software to perform a data conversion operation to convert data read from an external product and store the converted data in desired memory locations in the memory unit (20). Furthermore, when the memory card is connected to a computer, the micro controller (10) can read data from the memory (20) and convert the data for transfer to the computer via a corresponding interface.

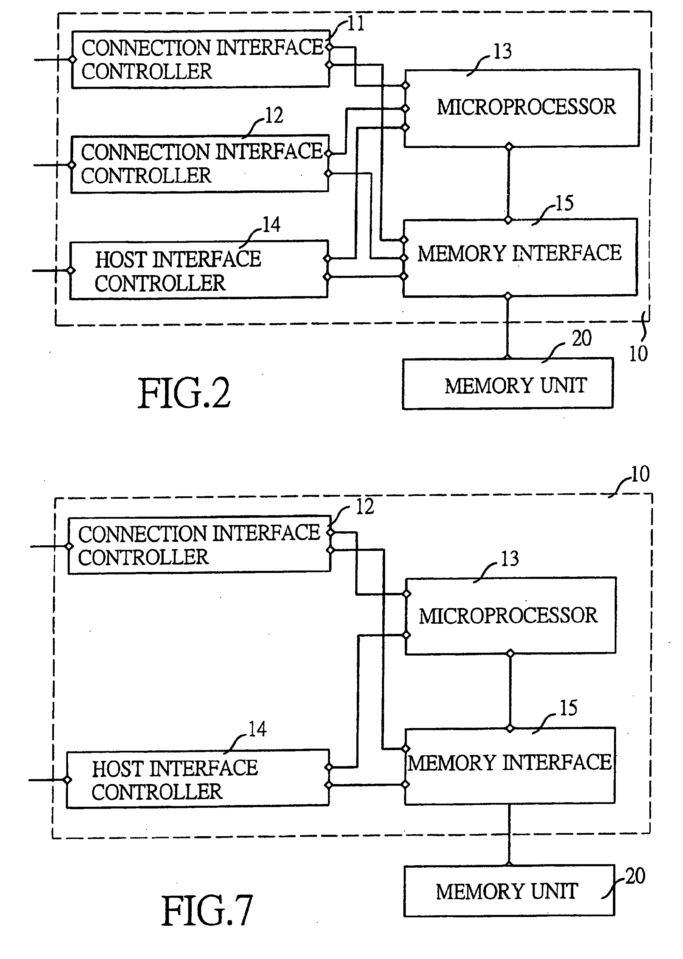

FIG. 2 shows the structure of the micro controller (10), which includes a microprocessor (13), a memory interface (15), multiple connection interface controllers (11, 12), and a host interface controller (14). The connection interface controllers (11, 12) are connected to the microprocessor (13) and the external connection interfaces (31, 32). The host interface controller (14) is connected to the microprocessor (13) and the external product interface (40). The memory interface (15) is connected to the microprocessor (13), the connection interface controllers (11, 12), and the host interface controller (14).

In this preferred embodiment, the micro controller (10) is provided with two connection interface controllers (11, 12); one is a USB interface controller and the other one is an IEEE 1394 interface controller.

The host interface controller (14) is preferred to conform to the specification of a STONE card for connecting to the external product interface (40).

With reference to FIG. 1, the memory unit (20) is composed of flash memory, random access memory or read only memory chips. In this preferred embodiment, the memory unit (20) is composed of four flash memory chips (21-24) connected together via the bus and also connected to the micro controller (10).

In this preferred embodiment, there are two connection interfaces (31, 32); one is a USB interface and the other is an IEEE1394 interface for connecting to the two connection interface controllers (11, 12), respectively.

The product interface (40) is preferred to conform to the specification of the STONE card for connecting to the host interface controller (14).

When the memory card is installed in a product and electrically connected to the product via the product interface (40), the data output of the product is transferred to the memory card via the product interface (40), and processed by the micro controller (10) for being stored in the memory unit (20),

With such a design, the memory card can be placed in a product for recording data and writing the stored data to a computer via different interfaces or reading data from a computer.

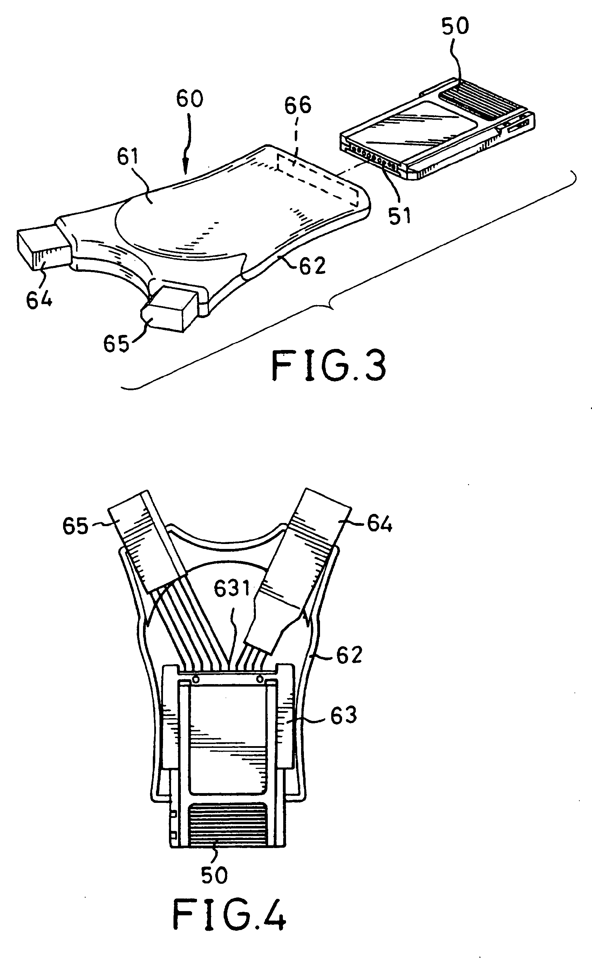

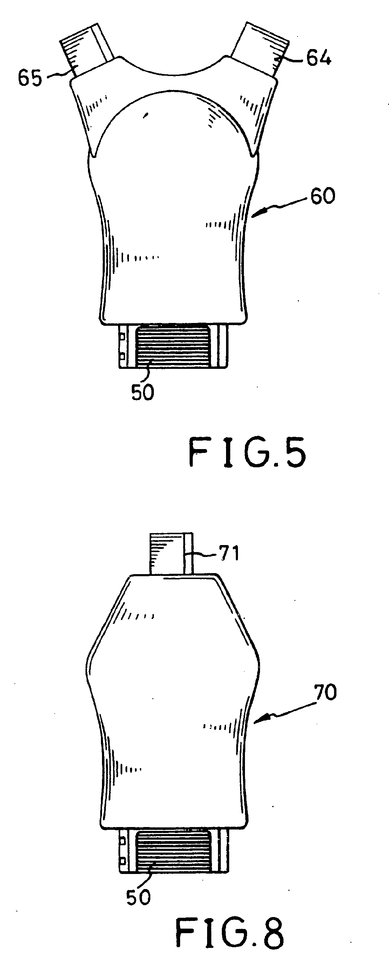

A practical implementation of the memory card in accordance with the present invention is shown in FIG. 3 for illustrative purpose. It is shown that a memory card (50) is in use with an adapter module (60), wherein the memory card (50) has the aforementioned micro controller (10), memory unit (20), and multiple interfaces. Furthermore, a front end of the memory card (50) is provided with an interface port (51) having a plurality of terminal holes. Four of the terminal holes are provided as the USB interface, while the others are provided as the IEEE 1394 interface and the product interface. In order to connect the memory card (50) to different interface ports of a computer, the adapter module (60) is employed, the internal structure of which is shown in FIG. 4.

With reference to FIG. 3 and FIG. 4, the adapter module (60) has an upper shell (61) and a lower shell (62) for combining with the upper shell (61) to form a housing, in which a terminal seat (63) is provided at one end of the housing, and a USB connector (64) and an IEEE 1394 connector (65) are provided at an opposite end of the housing.

The upper shell (61) and the lower shell (62) can be secured together by screw means or other appropriate securing means. Each of the upper shell (61) and lower shell (62) defines an opening at a first end thereof, thereby forming a slot (66) for receiving the memory card (50). A second end of each of the upper shell (61) and lower shell (62) has a Y-shape and defines two openings, thereby forming two slots for receiving the USB connector (64) and IEEE 1394 connector (65).

The terminal seat (63) is substantially an H-shaped body which has two parallel rims and a rib extending between the two rims. Each of the rims defines a sliding slot (not shown) in an inner side thereof, such that the memory card (50) can smoothly slide into the terminal seat (63). A plurality of connection terminals (631) is extended through the rib. Each connection terminal (631) has one end for facing to the interface port (51) of the memory card (50), and another end connected to the USB connector (64) and IEEE 1394 connector (65). Therefore, when the memory card (50) is inserted into the adapter module (60), the interface port (51) of the memory card (50) receives the connection terminals (631) of the terminal seat (63), such that the interface port (51) is electrically connected to the USB connector (64) and the IEEE 1394 connector (65) via the plurality of connection terminals (631).

After the memory card (50) is combined with the adapter module (60), as shown in FIG. 5, it can be plugged to the interface port of a computer via the USB connector (64) or the IEEE 1394 connector (65). The memory card (50) in the adapter module (60) is thus electrically connected to the computer. Because the memory card (50) is directly connected to the computer via a high speed interface, the data transfer between the memory card (50) and the computer is fast. Accordingly, the computer can read data from or write data to the memory card (50) in a fast and convenient manner.

In addition to directly inserting the adapter module (60) into the interface port of a computer, the adapter module (60) can be inserted into the slot of a hub that is further connected to the computer.

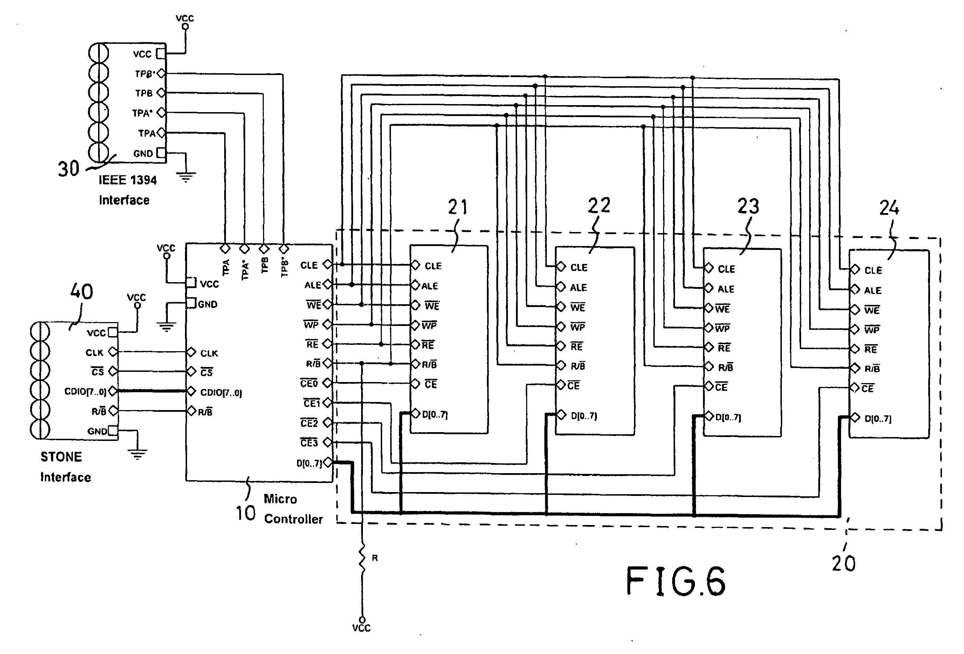

FIG. 6 is a circuit diagram of another preferred embodiment in accordance with the present invention, which differs from the previous embodiment in that the memory card is provided with only a connection interface (30) and a product interface (40). The connection interface (30) and product interface (40) are connected to the memory unit (20) via the micro controller (10).

FIG. 7 shows the structure of the micro controller (10), which includes a microprocessor (13), a memory interface (15), an IEEE 1394 interface controller (12), and a host interface controller (14). The IEEE 1394 interface controller (12) is connected to the connection interface (30). The host interface controller (14) is connected to the product interface (40).

As a result, the memory card can be placed in a product for recording data, or connected to the IEEE 1394 interface port of a computer via an adapter module. As shown in FIG. 8, the adapter module (70) is the same as that of the previous embodiment except that only one IEEE 1394 connector (71) is provided for connecting the memory card (50) in the adapter module (70) to the IEEE 1394 interface port of the computer.

The above description depicts the multi-interface memory card and the adapter module in accordance with the present invention. It is appreciated that such a design can be applied to the existing STONE card, Smart Media card, MMC card, Memory Stick card, Compact Flash card, and the like. Consequently, it is convenient to use a computer to read data from or write data to different kinds of memory cards.

## Claims

1. A multi-interface memory card (50) **characterized in that** said card (50) comprises:
a micro controller (10) having a microprocessor (13), a memory interface (15), multiple connection interface controllers (11, 12), and a host interface controller (14);
a memory unit (20) connected to said micro controller (10), such that external computers or electronic products can read data from or write data to said memory unit (20) under control of said micro controller (10);
multiple connection interfaces (31, 32) connected to said memory unit (20) via said micro controller (10) for controlling data access, said connection interfaces conforming to different interface specifications; and
a product interface (40) controlled by the host interface controller (14) for connecting to a digital product to read or write data;
the multi-interface memory card (50) having a front end formed with an interface port (51) for providing the multiple connection interfaces (31, 32) and the product interface (40), and wherein the multi-interface memory card (50) is combined with an adapter module (60) that comprises;
a housing defining a slot (66) for holding said memory card (50);
multiple interface connectors (64, 65) held in said housing and adapted for connecting to corresponding interface ports of a computer; and
a terminal seat (63) held in said housing and having multiple connection terminals (631), that connect to the interface port (51) and are divided into multiple groups, each group connecting to a respective connector (64, 65).

2. The multi-interface memory card (50) as claimed in claim 1, wherein there are two connection interfaces (31, 32).

3. The multi-interface memory card (50) as claimed in claim 2, wherein said two connection interfaces (31, 32) are a USB interface (31) and an IEEE 1394 interface (32).

4. The multi-interface memory card (50) as claimed in claim 1, wherein said housing is composed of an upper shell (61) and a lower shell (62), said upper shell (61) and lower shell (62) defining an opening at one end thereof, thereby forming said slot (66) for receiving said memory card (50), and another end of each of said upper shell (61) and lower shell (62) defining multiple slots for receiving said multiple interface connectors (64, 65).

5. The multi-interface memory card (50) as claimed in claim 4, wherein said terminal seat (63) is an H-shaped body which has two parallel rims and a rib extending between said two rims, each rim defining a sliding slot in an inner side thereof, and said plurality of connection terminals (631) being extended through said rib.

6. A multi-interface memory card (50) **characterized by** comprising:
a micro controller (10) having a microprocessor (13), a memory interface (15), multiple connection interface controllers (11, 12), and a host interface controller (14);
a memory unit (20) connected to said micro controller (10), such that external computers or electronic products can read data from or write data to said memory unit (20) under control of said micro controller (10);
a connection interface (30) connected to said memory unit (20) via said micro controller (10) for controlling data access, said connection interface conforming to an IEEE 1394 interface specification; and
a product interface (40) controlled by the host interface controller (14) for connecting to a digital product to read or write data;
the multi-interface memory card (50) having a front end formed with an interface port (51) for providing the connection interface (30) and the product interface (40), and wherein the multi-interface memory card is combined with an adapter module (70) that comprises:
a housing defining a slot for holding said memory card (50);
an IEEE 1394 interface connector (71) held in said housing and adapted for connecting to a corresponding interface port of a computer; and
a terminal seat held in said housing, said terminal seat having a plurality of connection terminals that connect to the interface port (51) and which connect to said IEEE 1394 interface connector (71).

7. The multi-interface memory card (50) as claimed in claim 6, wherein said housing is composed of an upper shell and a lower shell, each of said upper shell and lower shell defining an opening at one end thereof, thereby forming said slot for receiving said memory card (50), and another end of each of said upper shell and lower shell defining a slot for receiving said IEEE 1394 interface connector (71).

8. The multi-interface memory card (50) as claimed in claim 7, wherein said terminal seat is an H-shaped body which has two parallel rims and a rib extending between said two rims, each rim defining a sliding slot in an inner side thereof, and said plurality of connection terminals being extended through said rib.

## Patentansprüche

1. Mehrfach-Schnittstellen-Speicherkarte (50), **dadurch gekennzeichnet, dass** die Karte (50) umfasst:
Eine Mikrosteuereinrichtung (10), die einen Mikroprozessor (13), eine Speicher-Schnittstelle (15), multiple Verbindungsschnittstellen-Steuereinrichtungen (11, 12) und eine Host-Schnittstellen-Steuereinrichtung (14) aufweist,
eine Speichereinheit (20), die mit der Mikrosteuereinrichtung (10) verbunden ist, derart, dass externe Computer oder elektronische Produkte unter Steuerung der Mikrosteuereinrichtung (10) Daten aus der Speichereinheit (20) lesen oder Daten in die Speichereinheit (20) schreiben können,
multiple Verbindungsschnittstellen (31, 32), die mit der Speichereinheit (20) über die Mikrosteuereinrichtung (10) zum Steuern eines Datenzuganges verbunden sind, wobei die Verbindungsschnittstellen zu verschiedenen Schnittstellen-Spezifikationen konform sind, und
eine Produkt-Schnittstelle (40), die durch die Host-Schnittstellen-Steuereinrichtung (14) zum Verbinden mit einem digitalen Produkt gesteuert ist, um Daten zu lesen oder zu schreiben,
wobei die Mehrfach-Schnittstellen-Speicherkarte (50) ein vorderes Ende, das mit einem Schnittstellen-Port (51) gebildet ist, zum Bereitstellen der multiplen Verbindungsschnittstellen (31, 32) und der Produkt-Schnittstelle (40) aufweist und wobei die Mehrfach-Schnittstellen-Speicherkarte (50) mit einem Adaptermodul (60) kombiniert ist, welches umfasst:
Ein Gehäuse, das einen Schlitz (66) zum Halten der Speicherkarte (50) definiert,
multiple Schnittstellen-Verbinder (64, 65), die in dem Gehäuse gehalten sind und zum Verbinden mit korrespondierenden Schnittstellen-Ports eines Computers geeignet sind, und
einen Anschluss-Sitz (63), der in dem Gehäuse gehalten ist und multiple Verbindungsanschlüsse (631) aufweist, die mit dem Schnittstellen-Port (51) verbunden sind und in multiple Gruppen unterteilt sind, wobei jede Gruppe einen entsprechenden Verbinder (64, 65) verbindet.

2. Mehrfach-Schnittstellen-Speicherkarte (50) nach Anspruch 1, wobei dort zwei Verbindungsschnittstellen (31, 32) vorgesehen sind.

3. Mehrfach-Schnittstellen-Speicherkarte (50) nach Anspruch 2, wobei die zwei Verbindungsschnittstellen (31, 32) eine USB-Schnittstelle (31) und eine IEEE 1394-Schnittstelle (32) sind.

4. Mehrfach-Schnittstellen-Speicherkarte (50) nach Anspruch 1, wobei das Gehäuse aus einem oberen Mantel (61) und einem unteren Mantel (62) zusammengesetzt ist, wobei der obere Mantel (61) und der untere Mantel (62) eine Öffnung an einem Ende davon definieren, dabei den Schlitz (66) zum Aufnehmen der Speicherkarte (50) bilden, und wobei ein anderes Ende von jedem des oberen Mantels (61) und des unteren Mantels (62) multiple Schlitze zum Aufnehmen der multiplen Schnittstellen-Verbinder (64, 65) definieren.

5. Mehrfach-Schnittstellen-Speicherkarte (50) nach Anspruch 4, wobei der Anschluss-Sitz (63) ein H-förmiger Körper ist, der zwei parallele Wulstränder und eine Rippe, welche sich zwischen den zwei Wulsträndern erstreckt, aufweist, wobei jeder Wulstrand einen Gleitschlitz in eine Innenseite davon definiert und wobei sich die Vielzahl von Verbindungsanschlüssen (631) durch die Rippe erstreckt.

6. Mehrfach-Schnittstellen-Speicherkarte (50), **dadurch gekennzeichnet, dass** sie umfasst:
eine Mikrosteuereinrichtung (10), die einen Mikroprozessor (13), eine Speicher-Schnittstelle (15), Mehrfach-Verbindungsschnittstellen-Steuereinrichtungen (11, 12) und eine Host-Schnittstellen-Steuereinrichtung (14) aufweist,
eine Speichereinheit (20), die mit der Mikrosteuereinrichtung (10) verbunden ist, derart, dass externe Computer oder elektronische Produkte unter Steuerung der Mikrosteuereinrichtung (10) Daten aus der Speichereinheit (20) lesen oder Daten in die Speichereinheit (20) schreiben können,
eine Verbindungsschnittstelle (30), die mit der Speichereinheit (20) über die Mikrosteuereinrichtung (10) zum Steuern eines Datenzuganges verbunden ist, wobei die Verbindungsschnittstelle zu einer IEEE 1394-Schnittstellen-Spezifikation konform ist, und
eine Produkt-Schnittstelle (40), die durch die Host-Schnittstellen-Steuereinrichtung (14) zum Verbinden mit einem digitalen Produkt gesteuert ist, um Daten zu lesen oder zu schreiben,
wobei die Mehrfach-Schnittstellen-Speicherkarte (50) ein vorderes Ende, das mit einem Schnittstellen-Port (51) gebildet ist, zum Bereitstellen der Verbindungsschnittstelle (30) und der Produkt-Schnittstelle (40) aufweist und wobei die Mehrfach-Schnittstellen-Speicherkarte (50) mit einem Adaptermodul (70) kombiniert ist, welches umfasst:
ein Gehäuse, das einen Schlitz zum Halten der Speicherkarte (50) definiert,
einen IEEE 1394-Schnittstellen-Verbinder (71), der in dem Gehäuse gehalten ist und zum Verbinden mit einem korrespondierenden Schnittstellen-Port eines Computers geeignet ist, und
einen Anschluss-Sitz (63), der in dem Gehäuse gehalten ist, wobei der Anschluss-Sitz eine Vielzahl von Verbindungsanschlüssen aufweist, die mit dem Schnittstellen-Port (51) verbunden ist und die mit dem IEEE 1394-Schnittstellen-Verbinder (71) verbunden ist.

7. Mehrfach-Schnittstellen-Speicherkarte (50) nach Anspruch 6, wobei das Gehäuse aus einem oberen Mantel und einem unteren Mantel zusammengesetzt ist, wobei der obere Mantel und der untere Mantel eine Öffnung an einem Ende davon definieren, dabei den Schlitz zum Aufnehmen der Speicherkarte (50) bilden, und wobei ein anderes Ende von jedem des oberen Mantels und des unteren Mantels einen Schlitz zum Aufnehmen des IEEE 1394-Schnittstellen-Verbinders (71) definieren.

8. Mehrfach-Schnittstellen-Speicherkarte (50) nach Anspruch 7, wobei der Anschluss-Sitz (63) ein H-förmiger Körper ist, der zwei parallele Wulstränder und eine Rippe, welche sich zwischen den zwei Wulsträndern erstreckt, aufweist, wobei jeder Wulstrand einen Gleitschlitz in eine Innenseite davon definiert und wobei sich die Vielzahl von Verbindungsanschlüssen durch die Rippe erstreckt.

## Revendications

1. Carte mémoire (50) à interfaces multiples **caractérisée en ce que** ladite carte (50) comprend :
un microcontrôleur (10) possédant un microprocesseur (13), une interface (15) de mémoire, des dispositifs de commande (11, 12) d'interfaces de connexion multiples et un dispositif de commande (14) d'interface hôte ;
une unité de mémoire (20) connectée audit microcontrôleur (10), de telle manière que des ordinateurs ou des produits électroniques externes puissent lire des données depuis, ou écrire des données sur ladite unité de mémoire (20), le tout étant commandé par ledit microcontrôleur (10) ;
des interfaces de connexion multiples (31, 32) connectées à ladite unité de mémoire (20) par le biais dudit microcontrôleur (10) pour commander l'accès à des données, lesdites interfaces de connexion se conformant à différentes spécifications concernant l'interface ; et
une interface (40) de produit commandée par le dispositif de commande (14) d'interface hôte pour une connexion à un produit numérique afin de lire ou écrire des données ;
la carte mémoire (50) à interfaces multiples possédant une extrémité frontale formée avec un port (51) d'interface destiné à établir les interfaces de connexion multiples (31, 32) et l'interface (40) de produit, et dans laquelle la carte mémoire (50) à interfaces multiples est combinée avec un module formant adaptateur (60) qui comprend :
un logement définissant une fente (66) pour retenir ladite carte mémoire (50) ;
des connecteurs (64, 65) à interfaces multiples retenus dans ledit logement et adaptés pour se connecter à des ports d'interface correspondants d'un ordinateur ; et
un siège (63) de bornes retenu dans ledit logement et disposant de bornes de connexions multiples (631) qui se connectent au port (51) d'interface et sont divisées en groupes multiples, chaque groupe se connectant à un connecteur (64, 65) respectif.

2. Carte mémoire (50) à interfaces multiples selon la revendication 1, dans laquelle il existe deux interfaces de connexion (31, 32).

3. Carte mémoire (50) à interfaces multiples selon la revendication 2, dans laquelle lesdites deux interfaces de connexion (31, 32) sont une interface USB (31) et une interface IEEE 1394 (32).

4. Carte mémoire (50) à interfaces multiples selon la revendication 1, dans laquelle ledit logement est composé d'une coque supérieure (61) et d'une coque inférieure (62), ladite coque supérieure (61) et ladite coque inférieure (62) définissant une ouverture au niveau d'une de leurs extrémités, formant de ce fait ladite fente (66) destinée à recevoir ladite carte mémoire (50), et une autre extrémité de chacune parmi ladite coque supérieure (61) et ladite coque inférieure (62) définissant des fentes multiples destinées à recevoir lesdits connecteurs (64, 65) à interfaces multiples.

5. Carte mémoire (50) à interfaces multiples selon la revendication 4, dans laquelle ledit siège (63) de bornes est un corps en H qui dispose de deux rebords parallèles et d'un rebord s'étendant entre lesdits deux rebords, chaque rebord définissant une fente de coulissement du côté interne de ces derniers, et ladite pluralité de bornes de connexion (631) étant étendue au travers dudit rebord.

6. Carte mémoire (50) à interfaces multiples **caractérisée en ce qu'**elle comprend :
un microcontrôleur (10) disposant d'un microprocesseur (13), une interface (15) de mémoire, des dispositifs de commande (11, 12) d'interfaces de connexion multiples et un dispositif de commande (14) d'interface hôte ;
une unité de mémoire (20) connectée audit microcontrôleur (10), de telle manière que des ordinateurs ou produits électroniques externes puissent lire des données depuis ou écrire des données sur ladite unité de mémoire (20), le tout étant commandé par ledit microcontrôleur (10) ;
une interface de connexion (30) connectée à ladite unité de mémoire (20) par le biais dudit microcontrôleur (10) pour commander l'accès à des données, ladite interface de connexion se conformant à une spécification d'interface IEEE 1394 ; et
une interface (40) de produit commandée par le dispositif de commande (14) d'interface hôte pour une connexion à un produit numérique afin de lire ou écrire des données ;
la carte mémoire (50) à interfaces multiples disposant d'une extrémité frontale formée avec un port (51) d'interface destinée à établir l'interface de connexion (30) et l'interface (40) de produit, et dans laquelle la carte mémoire à interfaces multiples est combinée à un module formant adaptateur (70) qui comprend :
un logement définissant une fente pour retenir ladite carte mémoire (50) ;
un connecteur (71) à interface IEEE 1394 retenu dans ledit logement et adapté pour se connecter à un port d'interface correspondant d'un ordinateur ; et
un siège de bornes retenu dans ledit logement, ledit siège de bornes disposant d'une pluralité de bornes de connexion qui se connectent au port (51) d'interface et qui se connectent au connecteur (71) à interface IEEE 1394.

7. Carte mémoire (50) à interfaces multiples selon la revendication 6, dans laquelle ledit logement est composé d'une coque supérieure et d'une coque inférieure, chacune parmi lesdites coque supérieure et coque inférieure définissant une ouverture au niveau d'une de leurs extrémités, formant de ce fait ladite fente destinée à recevoir ladite carte mémoire (50), et une autre extrémité de chacune parmi lesdites coque supérieure et coque inférieure définissant une fente destinée à recevoir ledit connecteur (71) à interface IEEE 1394.

8. Carte mémoire (50) à interfaces multiples selon la revendication 7, dans laquelle ledit siège de bornes est un corps en H qui dispose de deux rebords parallèles et d'un rebord s'étendant entre lesdits deux rebords, chaque rebord définissant une fente de coulissement du côté interne de ces derniers, et ladite pluralité de bornes de connexion étant étendue au travers dudit rebord.
